# EUROPÄISCHE PATENTSCHRIFT

(11) **EP 0 882 187 B1**
(45) Veröffentlichungstag und Bekanntmachung des Hinweises auf die Patenterteilung: **11.09.2002**
(21) Anmeldenummer: 97915288.1
(22) Anmeldetag: 13.02.1997
(51) Int. Cl.: F15B 13/044, F16K 31/06

(54) **ELEKTROMAGNETISCH BETÄTIGTES WEGEVENTIL**
ELECTROMAGNETICALLY OPERATED DIRECTIONAL VALVE
DISTRIBUTEUR A COMMANDE ELECTROMAGNETIQUE

(30) Priorität: 01.03.1996 DE 19607773
(43) Veröffentlichungstag der Anmeldung: 09.12.1998
(73) Patentinhaber: ROBERT BOSCH GMBH, 70442 Stuttgart (DE)
(72) Erfinder: SANZENBACHER, Hermann, D-71701 Schwieberdingen (DE); KROLL, Peter, D-74376 Gemmrigheim (DE); LEUTNER, Volkmar, D-71292 Friolzheim (DE); ZUMBRAEGEL, Joachim, D-71735 Eberdingen (DE)
(86) Internationale Anmeldenummer: DE9700277
(87) Internationale Veröffentlichungsnummer: WO97032137

(56) Entgegenhaltungen:
- EP-A- 0 171 998
- DE-A- 2 109 770
- DE-A- 2 943 714
- US-A- 3 762 442
- US-A- 4 361 309
- US-A- 4 768 555

## Beschreibung

### Stand der Technik

Die Erfindung geht aus von einem elektromagnetisch betätigten Wegeventil nach der im Oberbegriff des Anspruchs 1 näher angegebenen Gattung.

Es ist schon ein solches elektromagnetisch betätigtes, hydraulisches Wegeventil aus der DE-OS 2 109 770 bekannt, das als 4-Wege-3-Stellungs-Ventil in Kompaktbauweise ausgebildet ist, bei dem die eigentlichen Ventilelemente im Magnetgehäuse integriert sind. Dieses 4/3-Wegeventil arbeitet mit einem Doppelhubmagnet, dessen Anker über einen Querstift an einem Stößel befestigt ist, der einstückig mit einem hohlen, längsbeweglichen Steuerschieber verbunden ist. In der Mittelstellung wird der Steuerschieber durch eine Rückstelleinrichtung mit zwei gegensinnig wirkenden Federn zentriert, die beiderseits des Ankers am Stößel gefesselt sind und sich über je ein Federteller am Gehäuse abstützen. Obwohl der Doppelhubmagnet einige Vorteile hat, weist dieses Wegeventil eine rein kraftschlüssige Zentrierung des Steuerschiebers durch die gegensinnig wirkenden, gleichstarken Federn auf, so daß die Mittelstellung mangels Anschlag nicht ausreichend fixiert ist. In vielen Fällen reicht eine solche kraftschlüssige Zentrierung nicht aus und führt zu einer ungünstigen Bauweise, zumal auch die Abstimmung der Lage der Steuerkanten auf die Magnetbetätigung Schwierigkeiten bereitet. Weiterhin erfordert das vorliegende Wegeventil eine spezielle Bauart von Steuerschieber mit Stößel, so daß Standardbauelemente nicht verwendbar sind. Bei einem Austausch der innenliegenden Feder muß das eigentliche Ventil auseinandergenommen werden.

Ferner ist aus der DE 29 43 714 A1 ein elektromagnetisch betätigtes, hydraulisches 4/3-Wegeventil bekannt, dessen Steuerschieber von zwei stirnseitig angeordneten, ein rückstellendes Federsystem bildenden Federn in einer Mittelstellung zentriert ist. Zwei einfach wirkende Schaltmagnete, die an beiden entgegengesetzt liegenden Stirnseiten eines Gehäuses angeordnet sind, bilden eine elektromagnetische Betätigungseinrichtung, mit welcher der Steuerschieber aus seiner Mittelstellung nach beiden Seiten hin in zwei Arbeitsstellungen auslenkbar ist. Dieses Wegeventil, das zum Erreichen von drei Stellungen zwei Schaltmagnete benötigt, baut verhältnismäßig lang. Ferner benötigt es zwei elektrische Anschlußkabel und zwei Gerätestecker, wodurch es relativ aufwendig baut und die Kosten höher liegen, als bei einem Doppelhubmagneten. Bei manchen Anwendungsfällen ist auch der Platzbedarf für ein Wegeventil mit zwei Schaltmagneten nicht vorhanden, so daß die Einsatzmöglichkeiten beschränkt sind.

### Vorteile der Erfindung

Das erfindungsgemäße, elektromagnetisch betätigte Wegeventil mit den kennzeichnenden Merkmalen des Hauptanspruchs hat demgegenüber den Vorteil, daß es unter Ausnutzung der besonderen Eigenschaften des Doppelhubmagneten eine einfache Bauweise ermöglicht, bei der sich eine sichere und genau definierte Ausbildung der Mittelstellung erreichen läßt. Durch die Verwendung des Doppelhubmagneten wird die Baulänge des Wegeventils erheblich kürzer als bei zwei einfachen Schaltmagneten, wobei ein zweites elektisches Anschlußkabel sowie ein zweiter Gerätestecker entfallen und somit das Wegeventil insgesamt kostengünstiger baut. Das Wegeventil zeichnet sich durch einen einfachen Innenaufbau seiner insbesondere beweglichen Teile aus, wodurch eine einfache und damit kostengünstige Montage möglich wird. Der Doppelhubmagnet und das hydraulische Wegeventil sind leicht aufeinander abstimmbar, wobei einzelne Bauelemente leicht justierbar sind. Das Wegeventil läßt sich weitgehend durch Verwendung standardmäßiger Bauelemente kostengünstig realisieren.

Durch die in den Unteransprüchen aufgeführten Maßnahmen sind vorteilhafte Weiterbildungen und Verbesserungen des im Hauptanspruch angegebenen Wegeventils möglich. Besonders vorteilhaft ist eine Ausgestaltung nach Anspruch 2, wenn Stößel und Steuerschieber als getrennte Bauteile ausgeführt werden. Bei dieser Bauform kann auf eine formschlüssige Verbindung zwischen Stößel und Steuerschieber verzichtet werden, so daß die Verwendung eines einfach bauenden Stößels und eines Standardschiebers möglich ist, wodurch sich eine besonders einfache und günstige Montage von Druckrohr und Steuerschieber ergibt. Für das Wegeventil kann somit eine Standardausführung eines bisherigen 4/3-Wegeventils verwendet werden. Ferner lassen sich bei vorliegendem Wegeventil durch geeignete Ausbildung der Federkennlinien und Abstimmung mit den Magnetkennlinien die Schaltleistungen optimieren. Weiterhin eignet sich das Wegeventil besonders zum Anbau einer Handnotbetätigung. Weitere vorteilhafte Ausgestaltungen ergeben sich aus den übrigen Ansprüchen, der Beschreibung sowie der Zeichnung.

### Zeichnung

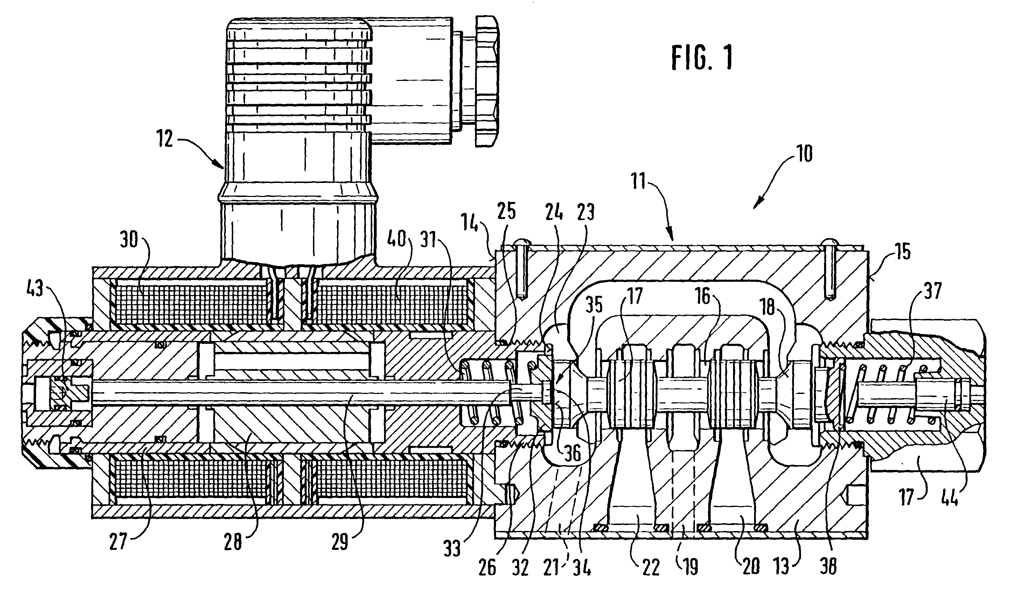

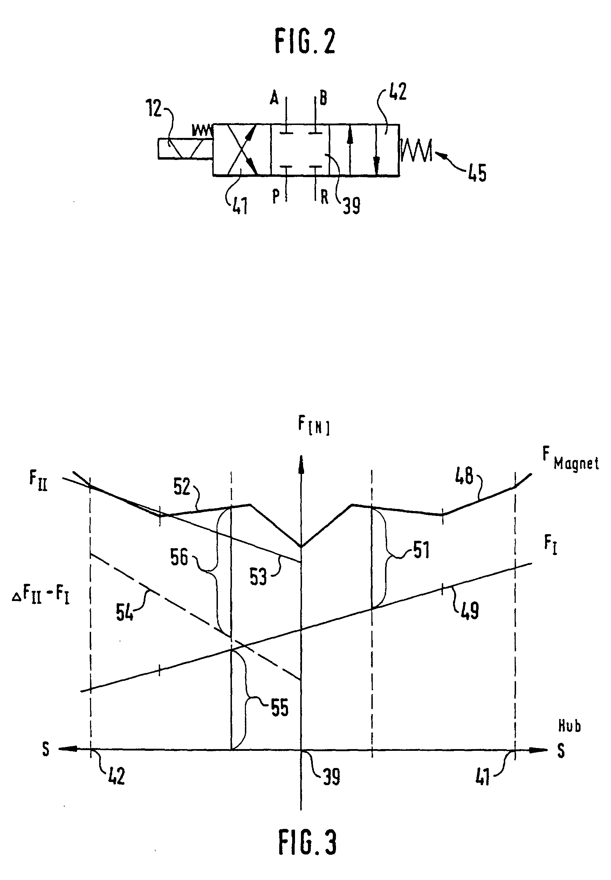

Ein Ausführungsbeispiel der Erfindung ist in der Zeichnung dargestellt und in der nachfolgenden Beschreibung näher erläutert. Es zeigen Figur 1 einen Längsschnitt durch ein elektromagnetisch betätigtes Wegeventil in vereinfachter Darstellung, Figur 2 ein Blockschaltbild für das Wegeventil nach Figur 1, und Figur 3 ein Kennlinienfeld für den Doppelhubmagnet und das rückstellende Federsystem des Wegeventils nach Figur 1.

### Beschreibung des Ausführungsbeispiels

Die Figur 1 zeigt einen Längsschnitt durch ein elektromagnetisch betätigtes Wegeventil 10, das im wesentlichen aus einem üblichen 4/3-Ventil 11 und einem angebauten Doppelhubmagneten 12 besteht.

Das Wegeventil 10 weist ein Gehäuse 13 auf, an dessen einer Stirnseite 14 der Doppelhubmagnet 12 angebaut ist, während an der gegenüberliegenden, zweiten Stirnseite 15 eine das Gehäuse 13 durchdringende Schieberbohrung 16 durch eine Verschlußkappe 17 verschlossen ist. In der Schieberbohrung 16 ist ein Steuerschieber 18 dicht und gleitend geführt, der die Druckmittelverbindungen zwischen einem Zulauf 19, einem Rücklauf 21 sowie zwei Verbraucheranschlüssen 22 und 20 steuert.

Im Bereich einer linken Rücklaufkammer 23 ist die Schieberbohrung 16 über einen gehäusefesten Absatz 24 aufgeweitet in eine zur Stirnseite 14 hin offene Gewindebohrung 25, in welche der Doppelhubmagnet 12 mit einem hülsenförmigen Gewindefortsatz 26 an seinem Druckrohr 27 eingeschraubt ist. Das Druckrohr 27 nimmt in seinem Inneren einen Anker 28 auf, dessen Längsbewegungen über einen Stößel 29 zum Steuerschieber 18 hin übertragen werden. Außen auf dem Druckrohr 27 sind die erste und zweite Spule 30, 40 des Doppelhubmagneten 12 angeordnet.

Das Druckrohr 27 nimmt im Bereich seines offenen Endes am hülsenförmigen Gewindefortsatz 26 in seinem Inneren eine erste, starke Feder 31 auf, die sich einerseits im Druckrohr 27 abstützt. Mit ihrem anderen Ende liegt diese Feder 31 an einem Federteller 32 an, der sich seinerseits an dem gehäusefesten Absatz 24 abstützt. Der Federteller 32 ist einerseits auf einem Halsabschnitt 33 des Stößels 29 in einem Bereich mit verringertem Durchmesser gleitend geführt, während ein am Halsabschnitt 33 angrenzender Bund 34 des Stößels 29 mit dem Federteller 32 eine formschlüssige Verbindung 35 bildet. Der am gehäusefesten Absatz 24 anliegende Federteller 32 bildet zugleich einen Anschlag 36 für den Steuerschieber 18, welcher von der in der Verschlußkappe 17 angeordneten zweiten Feder 37 gegen diesen Anschlag 36 gedrückt wird. Die zweite Feder 37 ist im Vergleich zur ersten Feder 31 erheblich schwächer ausgebildet und stützt sich einerseits in der Verschlußkappe 17 und andererseits über ein zweites Federteller 38 unmittelbar am Steuerschieber 18 ab. Wenn die schwache, zweite Feder 37 den Steuerschieber 18 gegen den Anschlag 36 drückt, während die stärkere, erste Feder 31 den Federteller 32 anliegend am gehäusefesten Absatz 24 hält, dann ist der Stößel 29 über seinen Bund 34 in axialer Richtung genau festgelegt, so daß auch der Anker 28 die gezeichnete Mittelstellung 39 einnimmt. Bei im Gehäuse 13 eingeschraubtem Druckrohr 27 dient somit der erste Federteller 32 als Anschlag 36 zur Mittenzentrierung des Steuerschiebers 18. Die schwache Feder 37 mit dem zugehörigen Federteller 38 ist in der Verschlußkappe 17 so angeordnet und abgestützt, daß sie während des gesamten Hubes des Steuerschiebers 18 zwischen seinen beiden Arbeitsstellungen 41 und 42, also beiderseits der Mittelstellung 39, auf den Steuerschieber 18 wirkt.

Am äußeren, freien Ende des Doppelhubmagneten 12 ist eine Handnotbetätigung 43 angebaut, mit der bei Ausfall des Doppelhubmagneten 12 der Stößel 29 betätigt werden kann. Ebenso ist in der Verschlußkappe 17 eine Handnotbetätigung 44 vorgesehen, mit welcher der Steuerschieber 18 bei Ausfall des Magneten hilfsweise betätigbar ist.

Die Figur 2 zeigt in vereinfachter Darstellung ein Blockschaltbild des Wegeventils 10 nach Figur 1. Der Steuerschieber wird durch ein rückstellendes Federsystem 45, zu dem die Federn 31 und 37 gehören, in der gezeichneten Mittelstellung 39 zentriert. Aus dieser Mittelstellung 39 heraus ist er nach beiden Seiten in Arbeitsstellungen 41, 42 auslenkbar, wobei der Doppelhubmagnet 12 abwechselnd eine der Spulen 30 bzw. 40 erregt und dadurch über den Anker 28 den Steuerschieber 18 gegen die rückstellenden Kräfte des Federsystems 45 auslenkt.

Die Wirkungsweise des elektromagnetisch betätigten Wegeventils 10 wird wie folgt erläutert, wobei zugleich auf die Figur 3 Bezug genommen wird, in der die Magnetkennlinien und die Federkennlinien eingetragen sind, um eine Darstellung der Kräftebilanz des elektromagnetischen Antriebs zu ermöglichen.

Bei nicht erregtem Doppelhubmagneten 12 wird der Steuerschieber 18 durch das rückstellende Federsystem 45 in der gezeichneten Mittelstellung 39 zentriert. Dabei drückt die auf der Magnetseite liegende starke Feder 31 den Federteller 32 gegen den gehäusefesten Absatz 24, während gleichzeitig die schwächere Feder 37 den Steuerschieber 18 gegen den als Anschlag 36 dienenden Federteller 32 drückt. Der Federteller 32 dient somit zur Mittenzentrierung des Steuerschiebers 18. Die schwache Feder 37 wirkt hierbei direkt auf den Steuerschieber 18. Durch den am Federteller 32 anliegenden Steuerschieber 18 ist der Stößel 29 mit seinem Bund 34 im Federteller 32 axial fixiert, so daß auch der Anker 28 seine Ausgangslage in der Mittelstellung 39 einnimmt.

Zum Auslenken des Steuerschiebers 18 aus seiner Mittelstellung 39 in eine Arbeitsstellung 41 wird im Doppelhubmagnet 12 die Spule 40 erregt, so daß der drückende Magnet über den Anker 28 und den Stößel 29 den Steuerschieber 18 gegen die Kraft der schwachen Feder 37 nach rechts in seine Arbeitsstellung bewegt. Die Kräftebilanz bei diesem Schaltvorgang des Steuerschiebers 18 geht aus der Figur 3 hervor, wo mit der ersten Magnetkennlinie 48 der Kraftverlauf über dem Hub dargestellt ist. Die Federkennlinie für die schwache Feder 37 ist mit 49 bezeichnet und ist so ausgelegt, daß eine ausreichende Überschußkraft zum Öffnen des Steuerschiebers 18 verbleibt. Beim Öffnen der Steuerkante des Steuerschiebers 18 ist diese Überschußkraft 51 zwischen der Magnetkennlinie 48 und der Federkennlinie 49 entnehmbar. Wie die Figur 3 deutlich zeigt, erstreckt sich die Federkennlinie 49 für die schwache Feder 37 über die Mittelstellung 39 hinaus bis zur anderen Arbeitsstellung 42, da die Feder 37 über den gesamten Hub des Steuerschiebers 18 wirksam ist. Beim Abschalten der Spule 40 wird der Steuerschieber 18 durch die schwache Feder 37 aus seiner Arbeitsstellung 41 zurück in die Mittelstellung 39 gedrückt. Während dieses Schaltvorgangs bleibt der erste Federteller 32 anliegend am Absatz 24, ohne die Bewegung des Stößels 29 zu behindern.

Wird der Steuerschieber 18 in entgegengesetzter Richtung ausgelenkt, so wird im Doppelhubmagneten 12 die Spule 30 erregt, so daß der nun ziehend arbeitende Magnet über den Anker 28 und den Stößel 29 den ersten Federteller 32 gegen die Kraft der stärkeren Feder 31 vom Absatz 24 abhebt. Diese in Figur 1 nach links gerichtete Schaltbewegung des Steuerschiebers 18 wird unterstützt durch die Kraft der schwachen Feder 37, die über die Mittelstellung 39 hinaus unmittelbar auf den Steuerschieber 18 wirkt. Der Federteller 32 wird dabei durch die formschlüssige Verbindung 35 vom Stößel 29 mitgezogen. Bei dieser Schaltbewegung stellt sich die Kräftebilanz nach Figur 3 wie folgt dar: Der Kraftverlauf des Magneten ist durch die Magnetkennlinie 52 dargestellt, welche symmetrisch zur ersten Magnetkennlinie 48 verläuft. Für die starke Feder 31 ist deren Kraftverlauf über dem Hub durch die zweite Federkennlinie 53 angegeben. Diese zweite Federkennlinie 53 erstreckt sich lediglich zwischen der Mittelstellung 39 und der zweiten Arbeitsstellung 42. Die zueinander entgegengesetzt wirkenden Kräfte nach der zweiten Federkennlinie 53 und der ersten Federkennlinie 49 führen im Bereich zwischen der Mittelstellung 39 und der zweiten Arbeitstellung 42 zu einer Differenzkraft, deren Verlauf durch die Differenzkraft-Kennlinie 54 in Figur 3 angegeben ist. Gegen diese Differenzkraft 54 muß der ziehend wirkende Magnet 12 arbeiten. Daraus ergibt sich im Bereich der Steuerkanten-Öffnung 55 eine Überschußkraft 56, durch welche der Steuerschieber 18 in Figur 1 nach links bewegt wird. Diese Überschußkraft 56 ist zwar hier etwas größer als die Überschußkraft 51 bei entgegengesetzter Auslenkung des Steuerschiebers 18, liegt aber mit dieser in einer vergleichbaren Größenordnung. Die Überschußkraft ist über den Hub des Steuerschiebers 18 so groß ausgelegt, daß das Wegeventil 10 einwandfreie Schalteigenschaften aufweist und insbesondere die jeweiligen Strömungskräfte und Reibungskräfte sicher überwunden werden.

Wie die Figur 3 ferner erkennen läßt, kann beim Wegeventil 10 leicht eine Schaltleistungsoptimierung durch die Wahl geeigneter Federkennlinien und/oder Magnetkennlinien vorgenommen werden. Die in Figur 3 symmetrisch dargestellten Magnetkennlinien 48 und 52 müssen dabei nicht beibehalten werden. Die sich durch die Federvorspannungen ergebenden, teilweise unsymmetrischen Federkraft-Kennlinien können durch entsprechend modifizierte Magnetkennlinien kompensiert werden. Dies bedeutet, daß die Magnetkennlinien unsymmetrisch gestaltet werden. Auf einfache Weise läßt sich dies erreichen, indem man im Doppelhubmagnet 12 durch unterschiedliche Polformgeometrie oder durch unterschiedliche Ampèrewindungszahlen der Magnetspulen 30 bzw. 40 die Eigenschaften des Magneten variiert. Federn und Magnete können dabei getrennt oder gemeinsam geändert werden, so daß eine Vielzahl von Kombinationen möglich ist.

Wird nach dem Erreichen der zweiten Arbeitsstellung 42 die erregte Spule 30 abgeschaltet, so wird der Steuerschieber 18 durch die Differenzkraft 54 aus der starken Feder 31 und der entgegengesetzt gerichteten schwachen Feder 37 in die in Figur 1 gezeichnete Mittelstellung 39 verschoben und dort zentriert. Eine Begrenzung der Arbeitsstellungen 41 und 42 läßt sich in einfacher Weise dadurch erreichen, daß der Anker 28 im Druckrohr 27 jeweils an den zugeordneten Jochteilen des Doppelhubmagneten 12 anschlägt.

Selbstverständlich sind an der gezeigten Ausführungsform Änderungen möglich, ohne vom Gedanken der Erfindung abzuweichen. So könnte nach Art einer kinematischen Umkehrung die starke Feder und die schwache Feder vertauscht angeordnet werden, wobei dann jedoch der Anker eine formschlüssige Verbindung mit dem Steuerschieber aufweisen muß, um eine ziehende Betätigung zu ermöglichen. Die in Figur 1 dargestellte Bauweise, bei der die starke Feder zwischen Magnet und Ventil angeordnet ist, stellt jedoch eine besonders vorteilhafte Kombination dar, die eine getrennte Bauweise von Stößel und Schieber erlaubt, indem sie mit einer einfachen kraftschlüssigen Verbindung auskommt.

## Patentansprüche

1. Elektromagnetisch betätigtes Wegeventil (10) mit einem in einem Gehäuse angeordneten Steuerschieber (18), der von einem rückstellenden Federsystem in einer Mittelstellung zentriert wird und von einem in zwei Richtungen arbeitenden Doppelhubmagneten (12) in beiderseits zur Mittelstellung liegende Arbeitsstellungen auslenkbar ist, wozu den beiden Spulen (30, 40) des Doppelhubmagneten ein Anker (28) zugeordnet ist, der über einen Stößel (29) mit dem Steuerschieber (18) in Wirkverbindung steht und bei dem das Federsystem zwei sich über Federteller (32, 38) abstützende, zueinander gegensinnig wirkende Federn (31, 37) aufweist, **dadurch gekennzeichnet, daß** die beiden Federn (31, 37) verschieden stark ausgebildet sind und ihre Abstützung so ausgeführt ist, daß bei Auslenkung des Steuerschiebers (18) aus seiner Mittelstellung (39) in seine eine Arbeitsstellung (41) der Doppelhubmagnet nur gegen die Kraft der schwachen Feder (37) arbeitet, während er bei Auslenkung von der Mittelstellung (39) in die andere Arbeitsstellung (42) gegen die Differenzkraft (54) der beiden gegensinnig wirkenden Federn (31, 37) arbeitet.

2. Wegeventil nach Anspruch 1, **dadurch gekennzeichnet, daß** der Stößel (29) getrennt vom Steuerschieber (18) ausgebildet ist und mit ihm eine kraftschlüssige Wirkverbindung aufweist.

3. Wegeventil nach Anspruch 1 oder 2, **dadurch gekennzeichnet, daß** die schwache Feder (37) zwischen einem gehäusefesten Bauteil (17) und dem Steuerschieber (18) so abgestützt ist, daß sie über den gesamten Hub des Steuerschiebers (18) zwischen beiden Arbeitsstellungen (41, 42) wirksam ist.

4. Wegeventil nach einem der Ansprüche 1 bis 3, **dadurch gekennzeichnet, daß** sich die starke Feder (31) einerseits an einem gehäusefesten Bauteil (27) und andererseits über den Federteller (32) am Gehäuse (13) abstützt, wobei der Federteller einen Anschlag (36) für den Steuerschieber (18) in dessen Mittelstellung (39) bildet und daß der Federteller (32) bei seiner Bewegung gegen die starke Feder (31) mit dem Stößel (33) formschlüssig verbunden ist.

5. Wegeventil nach einem der Ansprüche 1 bis 4, **dadurch gekennzeichnet, daß** die Federn (31, 37) auf entgegengesetzten Seiten des längsbeweglichen Steuerschiebers (18) angeordnet sind.

6. Wegeventil nach einem oder mehreren der Ansprüche 1 bis 5, **dadurch gekennzeichnet, daß** die starke Feder (31) zwischen Doppelhubmagnet (12) und Steuerschieber (18) angeordnet ist.

7. Wegeventil nach Anspruch 6, **dadurch gekennzeichnet, daß** die starke Feder (31) in einem Druckrohr (27) des Doppelhubmagneten (12) und die schwache Feder (37) in einer am Gehäuse (13) befestigten Verschlußkappe (17) angeordnet sind.

8. Wegeventil nach einem der Ansprüche 1 bis 7, **dadurch gekennzeichnet, daß** der Stößel (29) in der Mittelstellung (39) des Steuerschiebers (18) mit seinem freien Ende (34) kraftschlüssig am Ende des Steuerschiebers (18) anliegt und zugleich formschlüssig mit dem Federteller (32) verbunden ist.

9. Wegeventil nach einem der Ansprüche 1 bis 8, **dadurch gekennzeichnet, daß** es als 4/3-Ventil mit fünf Arbeitskammern im Gehäuse (13) ausgebildet ist, von denen eine außenliegende Rücklaufkammer (23) einen gehäusefesten Absatz (24) als Anschlag für den zentrierenden Federteller (32) aufweist.

10. Wegeventil nach einem der Ansprüche 1 bis 9, **dadurch gekennzeichnet, daß** die Kraftkennlinien (48, 52) des Doppelhubmagneten (12) von der Mittelstellung (39) aus im wesentlichen symmetrisch zueinander ausgebildet sind und daß die Überschußkräfte (51, 56) beim Öffnen der Steuerkanten des Steuerschiebers (18) in beiden Richtungen im wesentlichen die gleiche Größenordnung aufweisen.

11. Wegeventil nach einem der Ansprüche 1 bis 10, **dadurch gekennzeichnet, daß** am Doppelhubmagneten (12) und insbesondere an der Verschlußkappe (17) eine Handnotbetätigung (43, 44) angeordnet ist.

## Claims

1. Electromagnetically operated directional valve (10) having a control slide (18) which is arranged in a housing, is centred in a mid position by a restoring spring system and can be deflected by a double solenoid (12) operating in two directions into operating positions lying on either side of the mid position, to which end the two coils (30, 40) of the double solenoid are assigned an armature (28), which is operatively connected to the control slide (18) via a plunger (29), and in which the spring system has two springs (31, 37) supported by spring plates (32, 38) and acting in opposite directions in relation to each other, **characterized in that** the two springs (31, 37) are designed to have different strengths and their support is carried out in such a way that when the control slide (18) is deflected from its mid position (39) into its one operating position (41), the double solenoid operates only counter to the force of the weak spring (37), while when it is deflected from the mid position (39) into the other operating position (42), it operates counter to the differential force (54) of the two springs (31, 37) acting in opposite directions.

2. Directional valve according to Claim 1, **characterized in that** the plunger (29) is formed separately from the control slide (18) and is operatively connected to it by a force fit.

3. Directional valve according to Claim 1 or 2, **characterized in that** the weak spring (37) is supported between a component (17) fixed to the housing and the control slide (18) in such a way that it acts over the entire stroke of the control slide (18) between the two operating positions (41, 42).

4. Directional valve according to one of Claims 1 to 3, **characterized in that** the strong spring (31) is supported at one end on a component (27) fixed to the housing and at the other end via the spring plate (32) on the housing (13), the spring plate forming a stop (36) for the control slide (18) in its mid position (39), and **in that** the spring plate (32) is connected to the plunger (33) by a form fit during its movement counter to the strong spring (31).

5. Directional valve according to one of Claims 1 to 4, **characterized in that** the springs (31, 37) are arranged on opposite sides of the longitudinally moveable control slide (18).

6. Directional valve according to one or more of Claims 1 to 5, **characterized in that** the strong spring (31) is arranged between the double solenoid (12) and control slide (18).

7. Directional valve according to Claim 6, **characterized in that** the strong spring (31) is arranged in a pressure tube (27) of the double solenoid (12), and the weak spring (37) is arranged in a closure cap (17) fixed to the housing (13).

8. Directional valve according to one of Claims 1 to 7, **characterized in that** in the mid position (39) of the control slide (18), the plunger (29) bears with a force fit with its free end (34) on the end of the control slide (18) and, at the same time, is connected to the spring plate (32) by a form fit.

9. Directional valve according to one of Claims 1 to 8, **characterized in that** it is constructed as a 4/3 valve with five operating chambers in the housing (13), of which an outer return chamber (23) has an attachment (24) fixed to the housing as a stop for the centring spring plate (32).

10. Directional valve according to one of Claims 1 to 9, **characterized in that** the force characteristic curves (48, 52) of the double solenoid (12) from the mid position (39) outwards are designed to be substantially symmetrical to each other, and **in that** the excess forces (51, 56) when the control edges of the control slide (18) are opened have substantially the same order of magnitude in both directions.

11. Directional valve according to one of Claims 1 to 10, **characterized in that** an emergency hand operating means (43, 44) is arranged on the double solenoid (12) and in particular on the closure cap (17).

## Revendications

1. Distributeur à tiroir (10) à commande électromagnétique comportant un tiroir de commande (18) logé dans un boîtier, ce tiroir étant centré dans une position médiane par un système de ressort de rappel et déplacé par un électroaimant à double course (12) travaillant dans les deux directions, dans des positions de travail situées de part et d'autre de la position médiane, avec un induit (28) associé aux deux bobines (30, 40) de l'aimant à double course, cet induit coopérant par un poussoir (29) avec le tiroir de commande (18), et le système de ressort comportant deux ressorts (31, 37) agissant en sens opposé et s'appuyant par des plateaux à ressort (32, 38),
**caractérisé en ce que**
les deux ressorts (31, 37) ont une force différente et leur appui est tel qu'en cas de déplacement du tiroir de commande (18) par rapport à sa position médiane (39) dans l'une de ses positions de travail (41), l'électroaimant à double course travaille seulement contre la force du ressort (37) le plus faible, alors qu'en cas de déplacement par rapport à la position médiane (39) vers l'autre position de travail (42) il travaille contre la différence de force (54) des deux ressorts (31, 37) agissant en sens opposé.

2. Distributeur à tiroir selon la revendication 1,
**caractérisé en ce que**
le poussoir (29) est réalisé séparément du tiroir de commande (18) et relié à celui-ci par une liaison de coopération par la force.

3. Distributeur à tiroir selon l'une quelconque des revendications 1 ou 2,
**caractérisé en ce que**
le ressort faible (37) est appuyé entre un composant (17) solidaire du boîtier et le tiroir de commande (18), pour agir entre les deux positions de travail (41, 42) sur toute la course du tiroir de commande (18).

4. Distributeur à tiroir selon l'une quelconque des revendications 1 à 3
**caractérisé en ce que**
le ressort le plus fort (31) s'appuie d'un côté contre une pièce (27) solidaire du boîtier et de l'autre côté par un plateau à ressort (32) contre le boîtier (13), le plateau à ressort formant une butée (36) pour le tiroir de commande (18) dans sa position médiane (39) et le plateau à ressort (32), lors de son mouvement contre le ressort fort (31) est relié par une liaison de forme avec le poussoir (33).

5. Distributeur à tiroir selon l'une quelconque des revendications 1 à 4,
**caractérisé en ce que**
les ressorts (31, 37) sont installés sur les côtés opposés du tiroir de commande (18) mobile longitudinalement.

6. Distributeur à tiroir selon l'une quelconque des revendications 1 à 5,
**caractérisé en ce que**
le ressort le plus fort (31) est installé entre l'électroaimant à double course (12) et le tiroir de commande (18).

7. Distributeur à tiroir selon la revendication 6,
**caractérisé en ce que**
le ressort fort (31) est installé dans un tube de poussée (27) de l'électroaimant à double course (12) et le ressort faible (37) dans un capuchon de fermeture (17) fixé au boîtier (13).

8. Distributeur à tiroir selon l'une quelconque des revendications 1 à 7,
**caractérisé en ce que**
le poussoir (29) s'appuie en position médiane (39) du tiroir de commande (18), par son extrémité libre (34), par une liaison de force contre l'extrémité du tiroir de commande (18) et en même temps il est relié par une liaison de force au plateau à ressort (32).

9. Distributeur à tiroir selon l'une quelconque des revendications 1 à 8,
**caractérisé en ce qu'**
il est réalisé sous la forme d'un distributeur à 4/3 voies avec cinq chambres de travail dans le boîtier (12), dont une chambre de retour (23) située à l'extérieur, comporte un décrochement (24) solidaire du boîtier comme butée pour le plateau à ressort (32) de centrage.

10. Distributeur à tiroir selon l'une quelconque des revendications 1 à 9,
**caractérisé en ce que**
les lignes de force (48, 52) de l'électroaimant à double course (12) sont réalisées de manière essentiellement symétrique à partir de la position médiane (39) et les forces excédentaires (51, 56) lors de l'ouverture des arêtes de commande du tiroir de commande (18) ont essentiellement le même ordre de grandeur dans les deux directions.

11. Distributeur à tiroir selon l'une quelconque des revendications 1 à 10,
**caractérisé par**
une commande de secours (43, 44) prévue sur l'électroaimant à double course (12) et notamment sur le capuchon de fermeture (17).
